# EUROPEAN PATENT APPLICATION

(11) **EP 4 436 280 A1**
(43) Date of publication of application: **25.09.2024**
(21) Application number: 21963733.7
(22) Date of filing: 15.11.2021
(51) Int. Cl.: H04W 72/04

(54) **INFORMATION TRANSMISSION METHOD AND APPARATUS THEREFOR**

(71) Applicant: Beijing Xiaomi Mobile Software Co., Ltd., Beijing 100085 (CN)
(72) Inventor: CHI, Liangang, Beijing 100085 (CN)
(74) Representative: Kudlek, Franz Thomas
(86) International application number: PCT/CN2021/130767
(87) International publication number: WO 2023/082287

(57) **Abstract**

Disclosed in the embodiments of the present disclosure are an information transmission method and an apparatus therefor, which can be applied to the technical field of communications. The method, which is executed by a network device, comprises: sending a system information block on one or more candidate time-frequency domain resources. Therefore, even if there is an unavailable bandwidth in a plurality of candidate time-frequency domain resources, a terminal device can still receive a system information block that is sent by a network device, so as to perform information transmission with the network device on the basis of the received system information block, thereby ensuring the reliability of information transmission.

## Description

### TECHNICAL FIELD

The present disclosure relates to the field of communication technology, and in particular to methods and apparatuses for transmitting information.

### BACKGROUND

With the continuous development of communication technology, wireless spectrum resources in low frequency bands are gradually being depleted. The development and utilization of millimeter wave in high frequency bands and even terahertz communication technology has become an inevitable trend. However, the propagation loss in terahertz frequency bands is relatively severe, and small changes in transmission distance can greatly affect large-scale transmission characteristics of its channel. That is, available bandwidths of terminal devices at different distances are different. Therefore, how to use the terahertz frequency bands for information transmission has become an urgent problem to be solved.

### SUMMARY

Embodiments of the present disclosure provide methods and apparatuses for transmitting information, which can be applied in the field of communication technology.

In a first aspect, an embodiment of the present disclosure provides a method for transmitting information, performed by a network device, the method including: sending system information blocks on one or more candidate time-frequency domain resources.

Optionally, sending the system information blocks on the one or more candidate time-frequency domain resources includes:
simultaneously sending the system information blocks on a plurality of candidate time-frequency domain resources; or
sending the system information blocks on a plurality of candidate time-frequency domain resources in a time-division manner; or
sending the system information blocks on a candidate time-frequency domain resource in a time-division manner.

Optionally, the method further includes:
determining the one or more candidate time-frequency domain resources according to an agreement by a protocol.

Optionally, the system information blocks include any one of: downlink synchronization signals, system information, and demodulation reference signals of system information.

Optionally, each of the system information blocks satisfies at least one of:
each of the system information blocks corresponds to a time-frequency domain resource of a random access channel;
each of the system information blocks corresponds to a time-frequency domain resource of an uplink control channel;
each of the system information blocks corresponds to time-frequency domain resources of a plurality of random access channels; and
each of the system information blocks corresponds to time-frequency domain resources of a plurality of uplink control channels.

Optionally, different candidate time-frequency domain resources are distributed in different subbands.

Optionally, one of the subbands includes M resource blocks (RBs), and one of the RBs includes N orthogonal frequency division multiplexing (OFDM) subcarriers, where M and N are positive integers, respectively.

In a second aspect, an embodiment of the present disclosure provides another method for transmitting information, performed by a terminal device, the method including: receiving system information blocks on one or more candidate time-frequency domain resources.

Optionally, receiving the system information blocks on the one or more candidate time-frequency domain resources includes:
simultaneously receiving the system information blocks on a plurality of candidate time-frequency domain resources; or
receiving the system information blocks on a plurality of candidate time-frequency domain resources in a time-division manner; or
receiving the system information blocks on a candidate time-frequency domain resource in a time-division manner.

Optionally, the method further includes:
determining the one or more candidate time-frequency domain resources according to an agreement by a protocol.

Optionally, the system information blocks include any one of: downlink synchronization signals, system information, and demodulation reference signals of system information.

Optionally, each of the system information blocks satisfies at least one of:
each of the system information blocks corresponds to a time-frequency domain resource of a random access channel;
each of the system information blocks corresponds to a time-frequency domain resource of an uplink control channel;
each of the system information blocks corresponds to time-frequency domain resources of a plurality of random access channels; and
each of the system information blocks corresponds to time-frequency domain resources of a plurality of uplink control channels.

Optionally, the method further includes:
determining one or more time-frequency domain resources to be used based on signal qualities of received system information blocks.

Optionally, determining the one or more time-frequency domain resources to be used based on the signal qualities of the received system information blocks, includes:
determining one or more time-frequency domain resources of random access channels corresponding to one or more system information blocks of which signal qualities satisfy a preset condition as the one or more time-frequency domain resources of random access channels to be used; and/or
determining one or more time-frequency domain resources of uplink control channels corresponding to one or more system information blocks of which signal qualities satisfy a preset condition as the one or more time-frequency domain resources of uplink control channels to be used.

Optionally, the signal qualities satisfy the preset condition includes at least one of:
reference signal received powers (RSRPs) of synchronization signals are greater than a first threshold;
reference signal received qualities (RSRQs) of synchronization signals are greater than a second threshold;
signal-to-noise and interference ratios (SINRs) of synchronization signals are greater than a third threshold;
received signal strength indicators (RSSIs) of synchronization signals are greater than a fourth threshold;
RSRPs of demodulation reference signals are greater than a fifth threshold;
RSRQs of demodulation reference signals are greater than a sixth threshold;
SINRs of demodulation reference signals are greater than a seventh threshold; and
RSSIs of demodulation reference signals are greater than an eighth threshold.

Optionally, the method further includes:
determining values of the first threshold, the second threshold, the third threshold, the fourth threshold, the fifth threshold, the sixth threshold, the seventh threshold and the eighth threshold according to an agreement by a protocol; or
determining values of the first threshold, the second threshold, the third threshold, the fourth threshold, the fifth threshold, the sixth threshold, the seventh threshold and the eighth threshold based on configurations of a network device.

Optionally, different candidate time-frequency domain resources are distributed in different subbands.

Optionally, one of the subbands includes M resource blocks (RBs), and one of the RBs includes N orthogonal frequency division multiplexing (OFDM) subcarriers, where M and N are positive integers, respectively.

In a third aspect, an embodiment of the present disclosure provides a communication apparatus, which has some or all functions of the network device in the method described in the first aspect. For example, functions of the communication apparatus may have functions of some or all of the embodiments in the present disclosure, or may have functions of separately implementing any one of the embodiments in the present disclosure. The functions described can be implemented through hardware or by executing corresponding software through hardware. The hardware or software includes one or more units or modules corresponding to the above functions.

In a fourth aspect, an embodiment of the present disclosure provides another communication apparatus, which has some or all functions of the network device in the method described in the second aspect. For example, functions of the communication apparatus may have functions of some or all of the embodiments in the present disclosure, or may have functions of separately implementing any one of the embodiments in the present disclosure. The functions described can be implemented through hardware or by executing corresponding software through hardware. The hardware or software includes one or more units or modules corresponding to the above functions.

In a fifth aspect, an embodiment of the present disclosure provides a communication apparatus, including a processor, and when the processor calls a computer program in a memory, the method described in the first aspect is performed.

In a sixth aspect, an embodiment of the present disclosure provides a communication apparatus, including a processor, and when the processor calls a computer program in a memory, the method described in the second aspect is performed.

In a seventh aspect, an embodiment of the present disclosure provides a communication apparatus, which includes a processor and a memory, where the memory stores a computer program, and when executed by the processor, the computer program causes the communication apparatus to perform the method described in the first aspect.

In an eighth aspect, an embodiment of the present disclosure provides a communication apparatus, which includes a processor and a memory, where the memory stores a computer program, and when executed by the processor, the computer program causes the communication apparatus to perform the method described in the second aspect.

In a ninth aspect, an embodiment of the present disclosure provides a communication apparatus including a processor and an interface circuit, where the interface circuit is configured to receive code instructions and transmit the code instructions to the processor, and the processor is configured to run the code instructions to cause the communication apparatus to perform the method described in the first aspect.

In a tenth aspect, an embodiment of the present disclosure provides a communication apparatus including a processor and an interface circuit, where the interface circuit is configured to receive code instructions and transmit the code instructions to the processor, and the processor is configured to run the code instructions to cause the communication apparatus to perform the method described in the second aspect.

In an eleventh aspect, an embodiment of the present disclosure provides a communication system, including the communication apparatus as described in the third aspect and the communication apparatus as described in the fourth aspect, or including the communication apparatus as described in the fifth aspect and the communication apparatus as described in the sixth aspect, or including the communication apparatus as described in the seventh aspect and the communication apparatus as described in the eighth aspect, or including the communication apparatus as described in the ninth aspect and the communication apparatus as described in the tenth aspect.

In a twelfth aspect, an embodiment of the present disclosure provides a computer readable storage medium for storing instructions used for the above the network device, the method described in the first aspect is implemented when the instructions are executed.

In a thirteenth aspect, an embodiment of the present disclosure provides a computer readable storage medium for storing instructions used for the above terminal device, the method described in the second aspect is implemented when the instructions are executed.

In a fourteenth aspect, the present disclosure also provides a computer program product including a computer program that, when running on a computer, causes the computer to execute the method described in the first aspect.

In a fifteenth aspect, the present disclosure also provides a computer program product including a computer program that, when running on a computer, causes the computer to execute the method described in the second aspect.

In a sixteenth aspect, the present disclosure provides a chip system, which includes at least one processor and an interface for supporting a network device to realize the functions related to the first aspect, for example, determining or processing at least one of data and information related to the above method. In a possible design, the chip system further includes a memory, and the memory is used for storing computer programs and data necessary for the network device. The chip system can be composed of chips, or can also include chips and other discrete devices.

In a seventeenth aspect, the present disclosure provides a chip system, which includes at least one processor and an interface for supporting a terminal device to realize the functions related to the second aspect, for example, determining or processing at least one of data and information related to the above method. In a possible design, the chip system further includes a memory, and the memory is used for storing computer programs and data necessary for the terminal device. The chip system can be composed of chips, or can also include chips and other discrete devices.

In an eighteenth aspect, the present disclosure provides a computer program that, when running on a computer, causes the computer to perform the method described in the first aspect.

In a nineteenth aspect, the present disclosure provides a computer program that, when running on a computer, causes the computer to perform the method described in the second aspect.

### BRIEF DESCRIPTION OF THE DRAWINGS

In order to more clearly explain the technical solution in embodiments or background of the present disclosure, accompanying drawings required in the embodiments or background of the present disclosure will be described below.
FIG. 1 is a schematic architectural diagram of a communication system according to an embodiment of the present disclosure.
FIG. 2 is a schematic flowchart of a method for transmitting information according to an embodiment of the present disclosure.
FIG. 3 is a schematic flowchart of a method for transmitting information according to another embodiment of the present disclosure.
FIG. 4 is a schematic flowchart of a method for transmitting information according to another embodiment of the present disclosure.
FIG. 5 is a schematic flowchart of a method for transmitting information according to another embodiment of the present disclosure.
FIG. 6 is a schematic structural diagram of a communication apparatus according to an embodiment of the present disclosure.
FIG. 7 is a schematic structural diagram of a communication apparatus according to another embodiment of the present disclosure.
FIG. 8 is a schematic structural diagram of a chip according to an embodiment of the present disclosure.

### DETAILED DESCRIPTION OF THE EMBODIMENTS

The example embodiments will be described in detail herein, and examples thereof are shown in accompanying drawings. When the following descriptions refer to the accompanying drawings, unless otherwise indicated, the same numbers in different drawings represent the same or similar elements. The implementations described in the following example embodiments do not represent all the implementations consistent with the present disclosure. Rather, they are merely examples of the apparatus and method consistent with some aspects of the present disclosure as detailed in the appended claims.

It should be understood that in the present disclosure, "plurality" refers to two or more, and other quantifiers are similar. "And/or", which describes the association relationship of the associated objects, means that there can be three kinds of relationships, for example, A and/or B, which can mean that A exists alone, A and B exist at the same time, and B exists alone. The character "/" generally indicates that the associated objects are in an "or" relationship. The singular forms "a," "the," and "this" are intended to include the plural forms as well, unless the context clearly dictates otherwise.

For ease of understanding, terms involved in the present disclosure are first introduced.

### 1. Tera Hertz (THz)

Terahertz (THz) waves refers to electromagnetic waves with a frequency in a range of 0.1 ~ 10 THz (wavelength of 3000 ~ 30µ m). THz technology can be widely applied in radar, remote sensing, homeland security and anti-terrorism, highly confidential data communication and transmission, atmospheric and environmental monitoring, real-time biological information extraction, medical diagnosis and other fields.

In order to better understand methods for transmitting information disclosed in the embodiments of the present disclosure, a communication system to which the embodiments of the present disclosure applies will be described below.

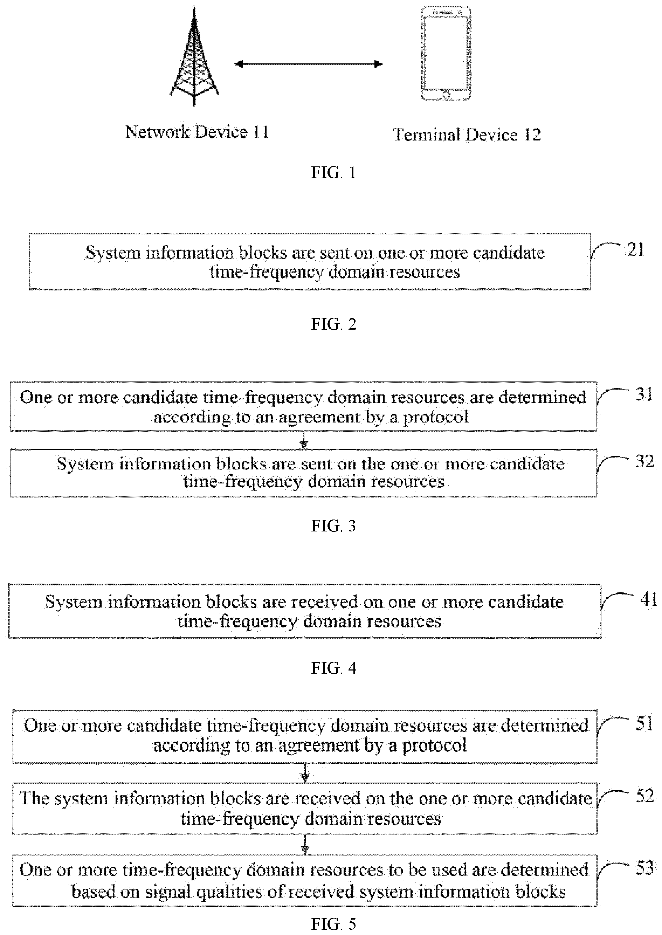

Please refer to FIG. 1, which is a schematic architectural diagram of a communication system according to an embodiment of the present disclosure. The communication system can include, but is not limited to, a network device and a terminal device. The number and form of devices shown in FIG. 1 are for example only and do not constitute a limitation to the embodiments of the present disclosure. In practical applications, the communication system can include two or more network devices and two or more terminal devices. The communication system shown in FIG. 1 includes a network device 11 and a terminal device 8.

It should be noted that the technical solution of the embodiments of the present disclosure can be applied to various communication systems, for example, long term evolution (LTE) systems, 5th generation (5G) mobile communication systems, 5G new radio (NR) systems, or other future new mobile communication systems.

The network device 11 in the embodiments of the present disclosure is an entity on a network side for transmitting or receiving signals. For example, the network device 11 can be an evolved NodeB (eNB), a transmission reception point (TRP), a next generation NodeB (gNB) in a NR system, a base station in other future mobile communication system, or an access node in a wireless fidelity (WiFi) system. The specific technology and device form adopted by the network device are not limited in the embodiments of the present disclosure. The network device provided in the embodiments of the present disclosure can include a central unit (CU) and a distributed unit (DU), where the CU can also be referred to as a control unit. With the CU-DU structure, protocol layers of the network device, such as the base station, can be separated. Functions of some protocol layers are centralized controlled by the CU, and functions of remaining some or all protocol layers are distributed in the DU, which is centralized controlled by the CU.

The terminal device 8 in the embodiments of the present disclosure is an entity on a user side for receiving or transmitting signals, for example, a mobile phone. The terminal device can also be referred to as a terminal, user equipment (UE), a mobile station (MS), a mobile terminal (MT), etc. The terminal device can include a car with communication **function,** a smart car, a mobile phone, a wearable device, a Pad, a computer with wireless transmission and reception function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, etc. The specific technology and device form adopted by the terminal device are not limited in the embodiments of the present disclosure.

It can be understood that the communication system described in the embodiments of the present disclosure is intended to provide a clearer explanation of the technical solution of the embodiments of the present disclosure, and does not constitute a limitation on the technical solution provided in the embodiments of the present disclosure. As ordinary technical personnel in the art know, with the evolution of system architecture and the emergence of new business scenarios, the technical solution provided in the embodiments of the present disclosure is also applicable to similar technical problems.

Next, methods and apparatuses for transmitting information provided by the present disclosure will be introduced in detail in combination with the accompanying drawings.

Please refer to FIG. 2, which is a schematic flowchart of a method for transmitting information according to an embodiment of the present disclosure. The method is performed by a network device. As shown in FIG. 2, the method can include but is not limited to step 21.

In step 21, system information blocks are sent on one or more candidate time-frequency domain resources.

It can be understood that the propagation loss in terahertz frequency bands is relatively severe, and small changes in transmission distance can greatly affect large-scale transmission characteristics of its channel, which will lead to different available bandwidths of terminal devices at different distances. In the present disclosure, a plurality of candidate time-frequency domain resources can be allocated to system information blocks, and then the system information blocks can be sent to a terminal device at the same time on the plurality of candidate time-frequency domain resources. Therefore, even if there is an unavailable bandwidth in terahertz communication, the terminal device can receive system information blocks sent by the network device, thereby transmitting information based on channel resources corresponding to the received system information blocks.

Optionally, different candidate time-frequency domain resources are distributed in different subbands. A subband can include M resource blocks (RBs), and one of the RBs can include N orthogonal frequency division multiplexing (OFDM) subcarriers, where M and N are positive integers, respectively.

Values of M and N can be the same or different, which is not limited by the present disclosure.

Optionally, the system information blocks sent by the network device on the plurality of candidate time-frequency domain resources can be the same or different, which is not limited by the present disclosure.

Optionally, the system information blocks can include any one of the following: downlink synchronization signals, system information, and demodulation reference signals of system information.

Optionally, each of the system information blocks can satisfy at least one of the following:
each of the system information blocks corresponds to a time-frequency domain resource of a random access channel;
each of the system information blocks corresponds to a time-frequency domain resource of an uplink control channel;
each of the system information blocks corresponds to time-frequency domain resources of a plurality of random access channels; and,
each of the system information blocks corresponds to time-frequency domain resources of a plurality of uplink control channels.

Optionally, if system signal blocks received by the terminal device correspond to time-frequency domain resources of a plurality of random access channels, the terminal device can perform random access based on the time-frequency domain resource of any random access channel included in the system signal blocks. Or, if the system signal blocks received by the terminal device correspond to time-frequency domain resources of a plurality of uplink control channels, the terminal device can transmit uplink data based on the time-frequency domain resource of any uplink control channel included in the system signal blocks, which is not limited by the present disclosure.

It can be understood that the network device can send system information blocks to the terminal device first. If the terminal device receives a system information block, the terminal device can perform random access or send uplink data based on the channel resource included in the system information block within a period of time after receiving the system information block.

In the embodiment of the present disclosure, the network device sends system information blocks to the terminal device on one or more candidate time-frequency domain resources. Thus, even if there is an unavailable bandwidth in a plurality of candidate time-frequency domain resources, the terminal device can receive system information blocks sent by the network device, and then perform information transmission with the network device based on the received system information blocks, thereby ensuring the reliability of information transmission.

Please refer to FIG. 3, which is a schematic flowchart of a method for transmitting information according to an embodiment of the present disclosure. The method is performed by a network device. As shown in FIG. 3, the method can include but is not limited to steps 31 and 32.

In step 31, one or more candidate time-frequency domain resources are determined according to an agreement by a protocol.

It can be understood that, since the propagation loss in terahertz frequency bands is relatively severe, small changes in transmission distance can greatly affect transmission characteristics of a channel. That is, available bandwidths corresponding to terminal devices at different distances are different. Therefore, in the present disclosure, frequency domain resources can be divided into a plurality of subbands through an agreement by a protocol, and a plurality of candidate time-frequency domain resources corresponding to system information blocks can be specified, and it is ensured that the system information blocks have the corresponding candidate time-frequency domain resource on each subband. Therefore, no matter how the distance between the terminal device and the network device changes, as long as the network device sends the system information blocks based on the plurality of candidate time-frequency domain resources, the terminal device can definitely receive a system information block from candidate time-frequency domain resource in at least one subband.

In step 32, system information blocks are sent on the one or more candidate time-frequency domain resources.

The specific implementation form of step 32 mentioned above can refer to the detailed description of any embodiment of the present disclosure, and will not be repeated herein.

Optionally, in the case of a plurality of candidate time-frequency domain resources, the network device can simultaneously send the system information blocks on the plurality of candidate time-frequency domain resources; or, the network device can also send the system information blocks on the plurality of candidate time-frequency domain resources in a time-division manner. In the case of one candidate time-frequency domain resource, the network device can send the system information blocks on the one candidate time-frequency domain resource in a time-division manner.

It can be understood that if the network device simultaneously sends the system information blocks on the plurality of candidate time-frequency domain resources, correspondingly, the terminal device can simultaneously receive multiple system information blocks based on the plurality of candidate time-frequency domain resources, so that the system information blocks can be received on at least one candidate time-frequency domain resource. Further, based on the received multiple system information blocks, available time-frequency domain resources can be determined, thereby ensuring reliable transmission of information and shortening the time for information transmission between the network devices and the terminal device.

In addition, if the network device sends the system information blocks on the plurality of candidate time-frequency resources in a time-division manner, correspondingly, the terminal device can receive system information blocks on the plurality of candidate time-frequency resources in a time-division manner. If the quality of a currently received system information block is good, the terminal device can transmit uplink data or perform random access based on channel information included in the system information block, thereby not only sending information to the network device in time, but also saving channel resources.

It can be understood that if the network device sends the system information blocks on one candidate time-frequency domain resource in a time-division manner, when the distance between the terminal device and the network device matches the candidate time-frequency domain resource, the terminal device can receive the system information blocks and then perform information transmission with the network device based on the candidate time-frequency domain resource.

In the embodiment of the present disclosure, the network device can first determine one or more candidate time-frequency domain resources according to an agreement by a protocol, and then send system information blocks on the one or more candidate time-frequency domain resources. Thus, even if there is an unavailable bandwidth in a plurality of candidate time-frequency domain resources, the terminal device can receive system information blocks sent by the network device, and then perform information transmission with the network device based on the received system information blocks, thereby ensuring the reliability of information transmission.

Please refer to FIG. 4, is a schematic flowchart of a method for transmitting information according to an embodiment of the present disclosure. The method is performed by a terminal device. As shown in FIG. 4, the method can include but is not limited to step 41.

In step 41, system information blocks are received on one or more candidate time-frequency domain resources.

It can be understood that the propagation loss in terahertz frequency bands is relatively severe, and small changes in transmission distance can greatly affect large-scale transmission characteristics of its channel, which will lead to different available bandwidths of terminal devices at different distances. Therefore, in the present disclosure, a plurality of candidate time-frequency domain resources can be allocated to system information blocks, and then the system information blocks can be sent to a terminal device at the same time on the plurality of candidate time-frequency domain resources. Therefore, the terminal device can receive the system information blocks sent by the network device from at least one time-frequency domain resource, and then perform information transmission with the network device based on channel resources corresponding to the received system information blocks.

Optionally, different candidate time-frequency domain resources are distributed in different subbands. A subband can include M resource blocks (RBs), and one of the RBs can include N orthogonal frequency division multiplexing (OFDM) subcarriers, where M and N are positive integers, respectively.

Optionally, the system information blocks include any one of the following: downlink synchronization signals, system information, and demodulation reference signals of system information.

Optionally, each of the system information blocks satisfies at least one of the following:
each of the system information blocks corresponds to a time-frequency domain resource of a random access channel;
each of the system information blocks corresponds to a time-frequency domain resource of an uplink control channel;
each of the system information blocks corresponds to time-frequency domain resources of a plurality of random access channels; and,
each of the system information blocks corresponds to time-frequency domain resources of a plurality of uplink control channels.

Optionally, if system signal blocks received by the terminal device correspond to time-frequency domain resources of a plurality of random access channels, the terminal device can perform random access based on the time-frequency domain resource of any random access channel included in the system signal blocks. Or, if the system signal blocks received by the terminal device correspond to time-frequency domain resources of a plurality of uplink control channels, the terminal device can transmit uplink data based on the time-frequency domain resource of any uplink control channel included in the system signal blocks, which is not limited by the present disclosure.

It can be understood that if the terminal device receives a system information block, the terminal device can perform random access or send uplink data based on the channel resource included in the system information block within a period of time after receiving the system information block.

In the embodiment of the present disclosure, the terminal device receives system information blocks on one or more candidate time-frequency domain resources, so that even if there is an unavailable bandwidth in a plurality of candidate time-frequency domain resources, the terminal device can receive system information blocks sent by the network device, and then perform information transmission with the network device based on the system information blocks, thereby ensuring the reliability of information transmission.

Please refer to FIG. 5, which is a schematic flowchart of a method for transmitting information according to an embodiment of the present disclosure. The method is performed by a terminal device. As shown in FIG. 5, the method can include but is not limited to steps 51 to 53.

In step 51, one or more candidate time-frequency domain resources are determined according to an agreement by a protocol.

It can be understood that, since the propagation loss in terahertz frequency bands is relatively severe, small changes in transmission distance can greatly affect transmission characteristics of a channel. That is, available bandwidths corresponding to terminal devices at different distances are different. Therefore, in the present disclosure, frequency domain resources can be divided into a plurality of subbands through an agreement by a protocol, and a plurality of candidate time-frequency domain resources corresponding to system information blocks can be specified, and it is ensured that the system information blocks have the corresponding candidate time-frequency domain resource on each subband. Therefore, no matter how the distance between the terminal device and the network device changes, as long as the network device sends the system information blocks based on the plurality of candidate time-frequency domain resources, the terminal device can definitely receive a system information block from the candidate time-frequency domain resource in at least one subband.

In step 52, the system information blocks are received on the one or more candidate time-frequency domain resources.

The specific implementation form of step 52 mentioned above can refer to the detailed description of any embodiment of the present disclosure, and will not be repeated herein.

Optionally, in the case of a plurality of candidate time-frequency domain resources, the terminal device can simultaneously receive the system information blocks on the plurality of candidate time-frequency domain resources; or, the terminal device can also receive the system information blocks on the plurality of candidate time-frequency domain resources in a time-division manner. In the case of one candidate time-frequency domain resource, the terminal device can receive the system information blocks on the one candidate time-frequency domain resource in a time-division manner.

It can be understood that if the network device simultaneously sends the system information blocks on the plurality of candidate time-frequency domain resources, correspondingly, the terminal device can simultaneously receive multiple system information blocks based on the plurality of candidate time-frequency domain resources, so that the system information blocks can be received on at least one candidate time-frequency domain resource. Further, based on the received multiple system information blocks, available time-frequency domain resources can be determined, thereby ensuring reliable transmission of information and shortening the time for information transmission between the network devices and the terminal device.

In addition, if the network device sends the system information blocks on the plurality of candidate time-frequency resources in a time-division manner, correspondingly, the terminal device can receive system information blocks on the plurality of candidate time-frequency resources in a time-division manner. If the quality of a currently received system information block is good, the terminal device can transmit uplink data or perform random access based on channel information included in the system information block, thereby not only sending information to the network device in time, but also saving channel resources.

It can be understood that if the network device sends the system information blocks on one candidate time-frequency domain resource in a time-division manner, when the distance between the terminal device and the network device matches the candidate time-frequency domain resource, the terminal device can receive the system information blocks and then perform information transmission with the network device based on the candidate time-frequency domain resource.

In step 53, one or more time-frequency domain resources to be used are determined based on signal qualities of received system information blocks.

It can be understood that the terminal device can first receive system signal blocks based on the one or more candidate time-frequency domain resources, and then determine signal qualities of the received system signal blocks. When the signal qualities of the system information block are greater than a preset condition, one or more time-frequency domain resources to be used by the terminal device are determined, and then uplink data is sent to the network device based on the time-frequency domain resources to be used, thereby ensuring the reliability of information transmission.

Optionally, the terminal device can determine one or more time-frequency domain resources of random access channels corresponding to one or more system information blocks of which signal qualities satisfy a preset condition as the one or more time-frequency domain resources of random access channels to be used.

Additionally, or alternatively, the terminal device can also determine one or more time-frequency domain resources of uplink control channels corresponding to one or more system information blocks of which signal qualities satisfy a preset condition as the one or more time-frequency domain resources of uplink control channels to be used.

Optionally, the signal qualities satisfy the preset condition can include at least one of the following:
reference signal received powers (RSRPs) of synchronization signals are greater than a first threshold;
reference signal received qualities (RSRQs) of synchronization signals are greater than a second threshold;
signal-to-noise and interference ratios (SINRs) of synchronization signals are greater than a third threshold;
received signal strength indicators (RSSIs) of synchronization signals are greater than a fourth threshold;
RSRPs of demodulation reference signals are greater than a fifth threshold;
RSRQs of demodulation reference signals are greater than a sixth threshold;
SINRs of demodulation reference signals are greater than a seventh threshold; and
RSSIs of demodulation reference signals are greater than an eighth threshold.

Optionally, the terminal device can determine the value of each of the first threshold, the second threshold, the third threshold, the fourth threshold, the fifth threshold, the sixth threshold, the seventh threshold and the eighth threshold according to an agreement by a protocol. Or, the terminal device can also determine the value of each threshold based on configurations of the network device.

Optionally, values of the above thresholds can be the same or different from each other, which is limited in the present disclosure.

In the embodiment of the present disclosure, the terminal device can first determine one or more candidate time-frequency domain resources according to an agreement by a protocol, then receive system information blocks on the one or more candidate time-frequency domain resources, and finally determine one or more time-frequency domain resources to be used based on signal qualities of received system information blocks. Therefore, the terminal device can transmit uplink data based on one or more time-frequency domain resources included in one or more system signal blocks with good signal quality, so that even if there is an unavailable bandwidth in a plurality of candidate time-frequency domain resources, the terminal device can receive system information blocks sent by the network device. Further, information transmission with network devices can be performed based on the one or more system signal blocks with good signal quality, thereby further ensuring the reliability of information transmission.

In the above-mentioned embodiments provided in the present disclosure, the methods provided in the embodiments of the present disclosure are introduced from perspectives of the network device and the terminal device, respectively. In order to realize various functions in the method provided in the above-mentioned embodiment of the present disclosure, the network device and the terminal device may include a hardware structure and a software module, and the above-mentioned various functions are realized in a form of a hardware structure, a software module, or a hardware structure plus a software module. A certain function in the above-mentioned various functions may be implemented in a form of a hardware structure, a software module, or a hardware structure plus a software module.

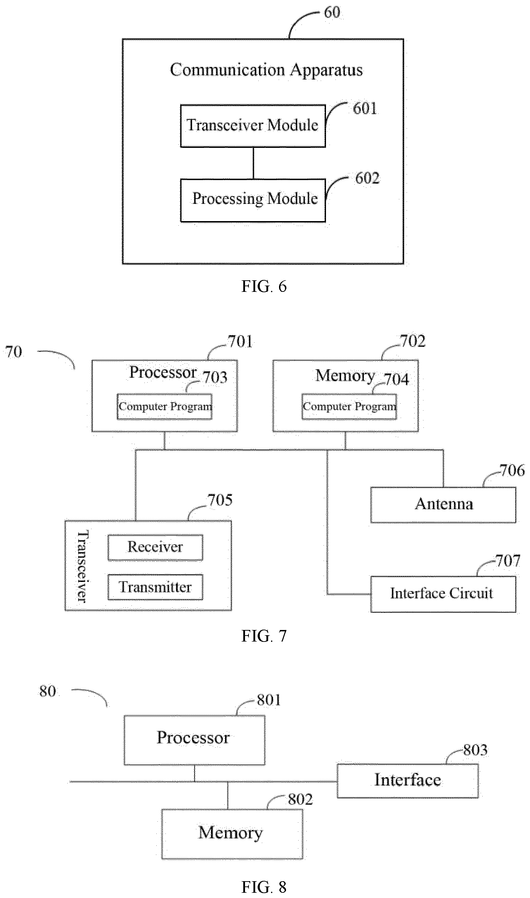

Referring to FIG. 6, FIG. 6 is a schematic structural diagram of a communication apparatus 60 according to an embodiment of the present disclosure. The communication apparatus 60 shown in FIG. 6 may include a processing module 601 and a transceiver module 602.

The transceiver module 602 may include a sending module and/or a receiving module. The sending module is configured to realize a sending function, and the receiving module is configured to realize a receiving function. The transceiver module 602 may realize a sending function and/or a receiving function.

It can be understood that the communication apparatus 60 may be a network device, may also be an apparatus in the network device, and may also be an apparatus that may be used in matching with the network device.

The communication apparatus 60 is on a network device side and includes:
the transceiver module 602 configured to send system information blocks on one or more candidate time-frequency domain resources.

Optionally, the transceiver module 602 is specifically configured to:
simultaneously send the system information blocks on a plurality of candidate time-frequency domain resources;
or, send the system information blocks on a plurality of candidate time-frequency domain resources in a time-division manner;
or, send the system information blocks on a candidate time-frequency domain resource in a time-division manner.

Optionally, the apparatus further includes:
the processing module 601, configured to determine the one or more candidate time-frequency domain resources according to an agreement by a protocol.

Optionally, the system information blocks include any one of: downlink synchronization signals, system information, and demodulation reference signals of system information.

Optionally, each of the system information blocks satisfies at least one of:
each of the system information blocks corresponds to a time-frequency domain resource of a random access channel;
each of the system information blocks corresponds to a time-frequency domain resource of an uplink control channel;
each of the system information blocks corresponds to time-frequency domain resources of a plurality of random access channels; and
each of the system information blocks corresponds to time-frequency domain resources of a plurality of uplink control channels.

Optionally, different candidate time-frequency domain resources are distributed in different subbands.

Optionally, one of the subbands includes M resource blocks (RBs), and one of the RBs includes N orthogonal frequency division multiplexing (OFDM) subcarriers, where M and N are positive integers, respectively.

According to the communication apparatus of the present disclosure, the network device sends system information blocks to the terminal device on one or more candidate time-frequency domain resources, so that even if there is an unavailable bandwidth in a plurality of candidate time-frequency domain resources, the terminal device can receive system information blocks sent by the network device, and then perform information transmission with the network device based on the received system information blocks, thereby ensuring the reliability of information transmission.

It can be understood that the communication apparatus 60 may be a terminal device, may also be an apparatus in the terminal device, and may also be an apparatus that may be used in matching with the terminal device.

The communication apparatus 60 is on a terminal device side and includes:
the transceiver module 602 configured to receive system information blocks on one or more candidate time-frequency domain resources.

Optionally, the transceiver module 602 is specifically configured to:
simultaneously receive the system information blocks on a plurality of candidate time-frequency domain resources;
or, receive the system information blocks on a plurality of candidate time-frequency domain resources in a time-division manner;
or, receive the system information blocks on a candidate time-frequency domain resource in a time-division manner.

Optionally, the communication apparatus 60 further includes:
the processing module 601, configured to determine the one or more candidate time-frequency domain resources according to an agreement by a protocol.

Optionally, the system information blocks include any one of: downlink synchronization signals, system information, and demodulation reference signals of system information.

Optionally, each of the system information blocks satisfies at least one of:
each of the system information blocks corresponds to a time-frequency domain resource of a random access channel;
each of the system information blocks corresponds to a time-frequency domain resource of an uplink control channel;
each of the system information blocks corresponds to time-frequency domain resources of a plurality of random access channels; and
each of the system information blocks corresponds to time-frequency domain resources of a plurality of uplink control channels.

Optionally, the processing module 601 is further configured to:
determine one or more time-frequency domain resources to be used based on signal qualities of received system information blocks.

Optionally, the processing module 601 is further specifically configured to:
determine one or more time-frequency domain resources of random access channels corresponding to one or more system information blocks of which signal qualities satisfy preset conditions as the one or more time-frequency domain resources of random access channels to be used;
and/or, determine one or more time-frequency domain resources of uplink control channels corresponding to one or more system information blocks of which signal qualities satisfy preset conditions as the one or more time-frequency domain resources of uplink control channels to be used.

Optionally, the signal qualities satisfy the preset conditions includes at least one of:
reference signal received powers (RSRPs) of synchronization signals are greater than a first threshold;
reference signal received qualities (RSRQs) of synchronization signals are greater than a second threshold;
signal-to-noise and interference ratios (SINRs) of synchronization signals are greater than a third threshold;
received signal strength indicators (RSSIs) of synchronization signals are greater than a fourth threshold;
RSRPs of demodulation reference signals are greater than a fifth threshold;
RSRQs of demodulation reference signals are greater than a sixth threshold;
SINRs of demodulation reference signals are greater than a seventh threshold; and
RSSIs of demodulation reference signals are greater than an eighth threshold.

Optionally, the processing module 601 is further specifically configured to:
determine values of the first threshold, the second threshold, the third threshold, the fourth threshold, the fifth threshold, the sixth threshold, the seventh threshold and the eighth threshold according to an agreement by a protocol;
or determine values of the first threshold, the second threshold, the third threshold, the fourth threshold, the fifth threshold, the sixth threshold, the seventh threshold and the eighth threshold based on configurations of a network device.

Optionally, different candidate time-frequency domain resources are distributed in different subbands.

Optionally, one of the subbands includes M resource blocks (RBs), and one of the RBs includes N orthogonal frequency division multiplexing (OFDM) subcarriers, where M and N are positive integers, respectively.

According to the communication apparatus of the present disclosure, the terminal device receives system information blocks on one or more candidate time-frequency domain resources, so that even if there is unavailable bandwidth among the multiple candidate time-frequency domain resources, the terminal device can still receive system information blocks sent by the network device, and transmit information to the network device based on the system information blocks, thereby ensuring the reliability of information transmission.

Referring to FIG. 7, FIG. 7 is a schematic structural diagram of a communication apparatus 70 according to another embodiment of the present disclosure. The communication apparatus 70 may be a network device, may be a terminal device, may be a chip, a chip system, or a processor that supports the network device to implement the above-mentioned method, and may also be a chip, a chip system, or a processor that supports the terminal device to implement the above-mentioned method. The apparatus may be configured to implement the method described in the above-mentioned method embodiment. For details, reference may be made to the description in the above-mentioned method embodiment.

The communication apparatus 70 may include one or more processors 701. The processor 701 may be a generic processor, a specific processor, or the like. For example, the processor 701 may be a baseband processor or a central processor. The baseband processor may be configured to process a communication protocol and communication data, and the central processor may be configured to control a communication device (such as, a base station, a baseband chip, a terminal, a terminal chip, a DU, or a CU, etc.), execute computer programs, and process data of the computer programs.

Additionally, the communication apparatus 70 may further include one or more memories 702, on which a computer program 704 may be stored, and the processor 701 executes the computer program 704, so that the communication apparatus 70 executes the method described in the above-mentioned method embodiments. Additionally, data may also be stored in the memory 702. The communication apparatus 70 and the memory 702 may be set separately or integrated together.

Additionally, the communication apparatus 70 may further include a transceiver 705 and an antenna 706. The transceiver 705 may be referred to as a transceiver unit, a transceiver machine, or a transceiver circuit, etc., and is configured to realize a transceiver function. The transceiver 705 may include a receiver and a transmitter. The receiver may be referred to as a receiver machine or a receiving circuit, etc., for realizing a receiving function. The transmitter may be referred to as a transmitting machine or a transmitting circuit, etc., and is configured to realize a transmitting function.

Additionally, the communication apparatus 70 may further include one or more interface circuits 707. The interface circuit 707 is configured to receive code instructions and transmit the code instructions to the processor 701. The processor 701 executes the code instructions to enable the communication apparatus 70 to perform the method described in the above-mentioned method embodiments.

The communication apparatus 70 is a network device. The processor 701 is configured to execute step 31 in FIG. 3. The transceiver 705 is configured to execute step 21 in FIG. 2 and step 32 in FIG. 3.

The communication apparatus 70 is a terminal device. The processor 701 is configured to execute step 51 and step 53 in FIG. 5. The transceiver 705 is configured to execute step 41 in FIG. 4 and step 52 in FIG. 5.

In an implementation, the processor 701 may include a transceiver configured to receive and transmit functions. For example, the transceiver may be a transceiver circuit, an interface, or an interface circuit. The transceiver circuit, the interface, or the interface circuit configured to receive and transmit the functions may be separated or integrated together. The transceiver circuit, the interface, or the interface circuit may be configured to read and write codes/data, or the transceiver circuit, the interface, or the interface circuit may be configured for signal transmission or transfer.

In an implementation, the processor 701 may store a computer program 703, and the computer program 703 runs on the processor 701, which may cause the communication apparatus 70 to execute the method described in the above-mentioned method embodiments. The computer program 703 may be solidified in the processor 701, and in this case, the processor 701 may be implemented by hardware.

In an implementation, the communication apparatus 70 may include a circuit, and the circuit may realize a function of transmitting, receiving or communicating in the above-mentioned method embodiments. The processor and transceiver described in the present disclosure may be implemented on an integrated circuit (IC), an analog IC, a radio frequency integrated circuit (RFIC), a mixed-signal IC, an application specific integrated circuit (ASIC), a printed circuit board (PCB), an electronic device, and the like. The processor and the transceiver may also be manufactured by using various IC process technologies, such as complementary metal oxide semiconductor (CMOS), an nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication apparatus described in the above-mentioned embodiment may be the network device or the terminal device, but the scope of the communication apparatus described in the present disclosure is not limited thereto, and a structure of the communication apparatus may not be limited by FIG. 7. The communication apparatus may be a stand-alone device or may be part of a larger device. For example, the communication apparatus may be:
(1) a stand-alone integrated circuit (IC), a chip, or a chip system or a subsystem;
(2) a set of one or more ICs, additionally, the set of the IC may also include storage components for storing data and computer programs;
(3) an ASIC, such as a modem;
(4) a module that may be embedded in other devices;
(5) a receiver, a terminal, an intelligent terminal, a cellular phone, a wireless device, a handset, a mobile unit, a vehicle-mounted device, a network device, a cloud equipment, an artificial intelligence device, etc. ;
(6) other devices, and so on.

For the communication apparatus that can be chips or chip systems, refer to a schematic structural diagram of a chip shown in FIG. 8. The chip shown in FIG. 8 includes a processor 801 and an interface 802. The number of the processor 801 can be one or more, and the number of the interface 802 may be multiple.

For the case where the chip is used to realize the function of the network device in the embodiment of the present disclosure:
the processor 801 is configured to execute step 31 in FIG. 3; and
the interface 802 is configured to execute step 21 in FIG. 2 and step 32 in FIG. 3.

For the case where the chip is used to realize the function of the terminal device in the embodiment of the present disclosure:
the processor 801 is configured to execute step 51 and step 53 in FIG. 5; and
the interface 802 is configured to execute step 41 in FIG. 4 and step 52 in FIG. 5.

Optionally, the chip further includes a memory 803 configured to store necessary computer programs and data.

Those skilled in the art may also understand that various illustrative logical blocks and steps listed in the embodiments of the present disclosure may be implemented by an electronic hardware, computer software, or a combination thereof. Whether this function is realized by hardware or software depends on a specific application and design requirements of the whole system. Those skilled in the art may use various methods to realize the described functions for each specific application, but this realization should not be understood as beyond the scope of protection of the embodiments of the present disclosure.

The embodiment of the present disclosure also provides a communication system. The system includes the communication apparatus as the terminal device and the communication apparatus as the network device in the embodiment of FIG. 6. Alternatively, the system includes the communication apparatus as the terminal device and the communication apparatus as the network device in the embodiment of FIG. 7.

The present disclosure also provides a computer readable storage medium having stored therein instructions that, when executed by a computer, cause functions of any one of the above-mentioned method embodiments to be implemented.

The present disclosure also provides a computer program product that, when executed by a computer, cause functions of any one of the above-mentioned method embodiments to be implemented.

In the above-mentioned embodiments, all or part of the functions may be realized by a software, a hardware, a firmware or any combination thereof. When the functions is realized by using a software, all or part of the functions may be realized in a form of a computer program product. The computer program product includes one or more computer programs. When the computer program is loaded and executed on a computer, all or part of the functions is generated according to the processes or functions the embodiments of the present disclosure. The computer may be a generic computer, a specific computer, a computer network, or other programmable devices. The computer program may be stored in the computer readable storage medium or transmitted from one computer readable storage medium to another computer readable storage medium. For example, the computer program may be transmitted from a website, a computer, a server or a data center to another website, another computer, another server or another data center in a wired (for example, a coaxial cable, an optical fiber, a digital subscriber line (DSL)) or wireless (for example, infrared, wireless, microwave, etc.) manner. The computer readable storage medium may be any available medium that may be accessed by a computer or integrated with a data storage device such as a server, a data center that contains one or more available media. The available medium may be a magnetic medium (for example, a floppy disk, a hard disk, a magnetic tape), an optical medium (for example, a high-density digital video disc (DVD)), or a semiconductor medium (for example, a solid state disk (SSD)), etc.

It may be understood by those of ordinary skill in the art that numerical numbers such as the first, the second and the like involved in the present disclosure are merely a convenient distinction for description, and are not used to limit the scope of the embodiments of the present disclosure, but also indicate the sequence.

At least one in the present disclosure may also be described as one or plurality, and the plurality may be two, three, four or more, which is not limited in the present disclosure. In an embodiment of the present disclosure, for one technical feature, a technical feature in the technical feature is distinguished by "first," "second," "third," "A," "B," "C," and "D". There is no precedence or magnitude order between the technical features described by "first," "second," "third," "A," "B," "C," and "D".

It should be understood that although terms such as "first", "second" and "third" may be used in embodiments of the present disclosure to describe various information, this information should not be limited by these terms. These terms are only used to distinguish information of the same type from each other. For example, without departing from the scope of the embodiments of the present disclosure, first information may also be referred to as second information, and similarly, the second information may also be referred to as the first information. As used herein, the term "if" may be interpreted as "when" or "upon" or "in response to determining" or "in the case of".

A correspondence shown in each table in the present disclosure may be configured or predefined. Values of the information in each table are merely examples, and may be configured as other values, which is not limited in the present disclosure. When configuring a correspondence between information and parameters, it is not necessary to configure all correspondences shown in each table. For example, in the table in the present disclosure, a correspondence shown in some rows may not be configured. For another example, appropriate deformation adjustments may be made based on the above-mentioned table, such as splitting, merging, and so on. Names of the parameters shown in the titles of the above-mentioned tables may also adopt other names that may be understood by the communication device, and values or representations of the parameters may also be other values or representations that may be understood by the communication device. Other data structures may also be adopted when the above-mentioned tables are implemented, such as arrays, queues, containers, stacks, linear tables, pointers, linked lists, trees, graphs, structures, classes, heaps, hash tables, etc.

The pre-definition in the present disclosure may be understood as definition, definition in advance, storage, pre-storage, pre-negotiation, pre-configuration, curing, or pre-firing.

Those of ordinary skill in the art may appreciate that units and algorithm steps of various examples described in conjunction with the embodiments disclosed herein may be implemented in an electronic hardware, or a combination of a computer software and the electronic hardware. Whether these functions are executed in a hardware or a software depends on the specific application and design constraints of the technical solution. Those skilled in the art may use different methods to implement the described functions for each specific application, but such implementation should not be considered beyond the scope of the present disclosure.

It is further understood that although the operations are depicted in a particular order in the accompanying drawings in the embodiment of the present disclosure, it should not be interpreted as that these operations are required to be performed in the specific order shown or in serial order, or all the operations shown are required to be executed to obtain the desired result. In a given environment, multitasking and parallel processing may be advantageous.

Other embodiments of the present disclosure will be apparent to those skilled in the art from consideration of the specification and practice of the disclosure disclosed here. The present application is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It may be clearly understood by those skilled in the art that for the convenience and conciseness of the description, specific working processes of the above-described systems, the apparatuses and the units may refer to corresponding processes in the above-mentioned method embodiments, which will not be elaborated herein.

The above is merely the specific implementation of the present disclosure, and the scope of the protection of the present disclosure is not limited thereto. Changes or substitutions will readily occur to those skilled in the art within the technical scope of the present disclosure, which is to be covered the scope of protection of the present disclosure. Therefore, the scope of protection of the present disclosure is as set forth in the scope of protection of the claims.

## Claims

1. A method for transmitting information, performed by a network device, the method comprising:
sending system information blocks on one or more candidate time-frequency domain resources.

2. The method according to claim 1, wherein sending the system information blocks on the one or more candidate time-frequency domain resources comprises:
simultaneously sending the system information blocks on a plurality of candidate time-frequency domain resources; or
sending the system information blocks on a plurality of candidate time-frequency domain resources in a time-division manner; or
sending the system information blocks on a candidate time-frequency domain resource in a time-division manner.

3. The method according to claim 1, further comprising:
determining the one or more candidate time-frequency domain resources according to an agreement by a protocol.

4. The method according to claim 1, wherein the system information blocks comprise any one of: downlink synchronization signals, system information, and demodulation reference signals of system information.

5. The method according to any one of claims 1 to 4, wherein each of the system information blocks satisfies at least one of:
each of the system information blocks corresponds to a time-frequency domain resource of a random access channel;
each of the system information blocks corresponds to a time-frequency domain resource of an uplink control channel;
each of the system information blocks corresponds to time-frequency domain resources of a plurality of random access channels; and
each of the system information blocks corresponds to time-frequency domain resources of a plurality of uplink control channels.

6. The method according to any one of claims 1 to 5, wherein different candidate time-frequency domain resources are distributed in different subbands.

7. The method according to claim 6, wherein one of the subbands comprises M resource blocks (RBs), and one of the RBs comprises N orthogonal frequency division multiplexing (OFDM) subcarriers, wherein M and N are positive integers, respectively.

8. A method for transmitting information, performed by a terminal device, the method comprising:
receiving system information blocks on one or more candidate time-frequency domain resources.

9. The method according to claim 8, wherein receiving the system information blocks on the one or more candidate time-frequency domain resources comprises:
simultaneously receiving the system information blocks on a plurality of candidate time-frequency domain resources; or
receiving the system information blocks on a plurality of candidate time-frequency domain resources in a time-division manner; or
receiving the system information blocks on a candidate time-frequency domain resource in a time-division manner.

10. The method according to claim 8, further comprising:
determining the one or more candidate time-frequency domain resources according to an agreement by a protocol.

11. The method according to claim 8, wherein the system information blocks comprise any one of: downlink synchronization signals, system information, and demodulation reference signals of system information.

12. The method according to any one of claims 8 to 11, wherein each of the system information blocks satisfies at least one of:
each of the system information blocks corresponds to a time-frequency domain resource of a random access channel;
each of the system information blocks corresponds to a time-frequency domain resource of an uplink control channel;
each of the system information blocks corresponds to time-frequency domain resources of a plurality of random access channels; and
each of the system information blocks corresponds to time-frequency domain resources of a plurality of uplink control channels.

13. The method according to any one of claims 8 to 8, further comprising:
determining one or more time-frequency domain resources to be used based on signal qualities of received system information blocks.

14. The method according to claim 13, wherein, determining the one or more time-frequency domain resources to be used based on the signal qualities of the received system information blocks, comprises:
determining one or more time-frequency domain resources of random access channels corresponding to one or more system information blocks of which signal qualities satisfy a preset condition as the one or more time-frequency domain resources of random access channels to be used; and/or
determining one or more time-frequency domain resources of uplink control channels corresponding to one or more system information blocks of which signal qualities satisfy a preset condition as the one or more time-frequency domain resources of uplink control channels to be used.

15. The method according to claim 14, wherein the signal qualities satisfy the preset condition comprises at least one of:
reference signal received powers (RSRPs) of synchronization signals are greater than a first threshold;
reference signal received qualities (RSRQs) of synchronization signals are greater than a second threshold;
signal-to-noise and interference ratios (SINRs) of synchronization signals are greater than a third threshold;
received signal strength indicators (RSSIs) of synchronization signals are greater than a fourth threshold;
RSRPs of demodulation reference signals are greater than a fifth threshold;
RSRQs of demodulation reference signals are greater than a sixth threshold;
SINRs of demodulation reference signals are greater than a seventh threshold; and
RSSIs of demodulation reference signals are greater than an eighth threshold.

16. The method according to claim 15, further comprising:
determining values of the first threshold, the second threshold, the third threshold, the fourth threshold, the fifth threshold, the sixth threshold, the seventh threshold and the eighth threshold according to an agreement by a protocol; or
determining values of the first threshold, the second threshold, the third threshold, the fourth threshold, the fifth threshold, the sixth threshold, the seventh threshold and the eighth threshold based on configurations of a network device.

17. The method according to any one of claims 8 to 16, wherein different candidate time-frequency domain resources are distributed in different subbands.

18. The method according to claim 17, wherein one of the subbands comprises M resource blocks (RBs), and one of the RBs comprises N orthogonal frequency division multiplexing (OFDM) subcarriers, wherein M and N are positive integers, respectively.

19. An apparatus for transmitting information, on a network device, the apparatus comprising:
a transceiver module, configured to send system information blocks on one or more candidate time-frequency domain resources.

20. The apparatus according to claim 19, wherein the transceiver module is specifically configured to:
simultaneously send the system information blocks on a plurality of candidate time-frequency domain resources; or,
send the system information blocks on a plurality of candidate time-frequency domain resources in a time-division manner; or,
send the system information blocks on a candidate time-frequency domain resource in a time-division manner.

21. The apparatus according to claim 19, further comprising:
a processing module, configured to determine the one or more candidate time-frequency domain resources according to an agreement by a protocol.

22. The apparatus according to claim 19, wherein the system information blocks comprise any one of: downlink synchronization signals, system information, and demodulation reference signals of system information.

23. The apparatus according to any one of claims 19 to 22, wherein each of the system information blocks satisfies at least one of:
each of the system information blocks corresponds to a time-frequency domain resource of a random access channel;
each of the system information blocks corresponds to a time-frequency domain resource of an uplink control channel;
each of the system information blocks corresponds to time-frequency domain resources of a plurality of random access channels; and
each of the system information blocks corresponds to time-frequency domain resources of a plurality of uplink control channels.

24. The apparatus according to any one of claims 19 to 23, wherein different candidate time-frequency domain resources are distributed in different subbands.

25. The apparatus according to claim 24, wherein one of the subbands comprises M resource blocks (RBs), and one of the RBs comprises N orthogonal frequency division multiplexing (OFDM) subcarriers, wherein M and N are positive integers, respectively.

26. An apparatus for transmitting information, on a terminal device, the apparatus comprising:
a transceiver module, configured to receive system information blocks on one or more candidate time-frequency domain resources.

27. The apparatus according to claim 26, wherein the transceiver module is specifically configured to:
simultaneously receive the system information blocks on a plurality of candidate time-frequency domain resources; or,
receive the system information blocks on a plurality of candidate time-frequency domain resources in a time-division manner; or,
receive the system information blocks on a candidate time-frequency domain resource in a time-division manner.

28. The apparatus according to claim 26, further comprising:
a processing module, configured to determine the one or more candidate time-frequency domain resources according to an agreement by a protocol.

29. The apparatus according to claim 26, wherein the system information blocks comprise any one of: downlink synchronization signals, system information, and demodulation reference signals of system information.

30. The apparatus according to any one of claims 26 to 29, wherein each of the system information blocks satisfies at least one of:
each of the system information blocks corresponds to a time-frequency domain resource of a random access channel;
each of the system information blocks corresponds to a time-frequency domain resource of an uplink control channel;
each of the system information blocks corresponds to time-frequency domain resources of a plurality of random access channels; and
each of the system information blocks corresponds to time-frequency domain resources of a plurality of uplink control channels.

31. The apparatus according to any one of claims 26 to 30, wherein the processing module is further configured to:
determine one or more time-frequency domain resources to be used based on signal qualities of received system information blocks.

32. The apparatus according to claim 31, wherein the processing module is further specifically configured to:
determine one or more time-frequency domain resources of random access channels corresponding to one or more system information blocks of which signal qualities satisfy a preset condition as the one or more time-frequency domain resources of random access channels to be used; and/or
determine one or more time-frequency domain resources of uplink control channels corresponding to one or more system information blocks of which signal qualities satisfy a preset condition as the one or more time-frequency domain resources of uplink control channels to be used.

33. The apparatus according to claim 32, wherein the signal qualities satisfy the preset condition comprises at least one of:
reference signal received powers (RSRPs) of synchronization signals are greater than a first threshold;
reference signal received qualities (RSRQs) of synchronization signals are greater than a second threshold;
signal-to-noise and interference ratios (SINRs) of synchronization signals are greater than a third threshold;
received signal strength indicators (RSSIs) of synchronization signals are greater than a fourth threshold;
RSRPs of demodulation reference signals are greater than a fifth threshold;
RSRQs of demodulation reference signals are greater than a sixth threshold;
SINRs of demodulation reference signals are greater than a seventh threshold; and
RSSIs of demodulation reference signals are greater than an eighth threshold.

34. The apparatus according to claim 33, wherein the processing module is further specifically configured to:
determine values of the first threshold, the second threshold, the third threshold, the fourth threshold, the fifth threshold, the sixth threshold, the seventh threshold and the eighth threshold according to an agreement by a protocol; or
determine values of the first threshold, the second threshold, the third threshold, the fourth threshold, the fifth threshold, the sixth threshold, the seventh threshold and the eighth threshold based on configurations of a network device.

35. The apparatus according to any one of claims 26 to 34, wherein different candidate time-frequency domain resources are distributed in different subbands.

36. The apparatus according to claim 35, wherein one of the subbands comprises M resource blocks (RBs), and one of the RBs comprises N orthogonal frequency division multiplexing (OFDM) subcarriers, wherein M and N are positive integers, respectively.

37. A communication apparatus, comprising a processor and a memory, wherein the memory stores a computer program, and the processor executes the computer program stored in the memory to implement the method according to any one of claims 1 to 7.

38. A communication apparatus, comprising a processor and a memory, wherein the memory stores a computer program, and the processor executes the computer program stored in the memory to implement the method according to any one of claims 8 to 18.

39. A communication apparatus, comprising a processor and an interface circuit; wherein,
the interface circuit is configured to receive code instructions and transmit the code instructions to the processor; and
the processor is configured to execute the code instructions to perform the method according to any one of claims 1 to 7.

40. A communication apparatus, comprising a processor and an interface circuit; wherein,
the interface circuit is configured to receive code instructions and transmit the code instructions to the processor; and
the processor is configured to execute the code instructions to perform the method according to any one of claims 8 to 18.

41. A computer readable storage medium for storing instructions that, when executed, implement the method according to any one of claims 1 to 7.

42. A computer readable storage medium for storing instructions that, when executed, implement the method according to any one of claims 8 to 18.
